# EUROPEAN PATENT APPLICATION

(11) **EP 1 433 379 A2**
(43) Date of publication of application: **30.06.2004**
(21) Application number: 03015971.9
(22) Date of filing: 14.07.2003
(51) Int. Cl.: A01K 1/01

(54) **Cleaning device for quickly cleaning small-domestic animal beddings**

(30) Priority: 18.12.2002 IT MI20020590
(71) Applicant: Genovese, Giacomo, Cinisello Balsamo (Milano) (IT)
(72) Inventor: Genovese, Giacomo, Cinisello Balsamo (Milano) (IT)
(74) Representative: Cicogna, Franco

(57) **Abstract**

The present invention relates to a device for quickly cleaning beddings of small domestic animals, which comprises a device casing, on which is arranged a collecting net for separating sand from the organic waste of the domestic animals.

The screened sand can be reused, while the organic waste can be easily disposed of.

## Description

### BACKGROUND OF THE INVENTION

The present invention relates to a device for quickly cleaning beddings of small domestic animals.

As is known, beddings of small domestic animals usually include a sand layer which, advantageously, has been processed for eliminating disagreeable odors therefrom.

This sand layer must be periodically replaced in order to hold the bedding in a cleaned condition.

At present, as the user performs cleaning operations, he/she is compelled to dispose of all the sand material, and replace it with a new sand layer.

Thus, the sand is disadvantageously wasted, and this, moreover, causes a lot of related drawbacks.

In fact, in addition to the economic aspects, the need of supplying new sand generates problems related to the sand weight and the comparatively high sand amounts which must be used.

### SUMMARY OF THE INVENTION

Accordingly, the aim of the present invention is to solve the above mentioned problem, by providing a cleaning device for quickly cleaning beddings of small domestic animals which allows to easily recover a great portion of the sand material of the layer to be cleaned, thereby greatly reduce the sand consume.

Within the scope of the above mentioned aim, a main object of the present invention is to provide such a cleaning device which allows to perform, in a very simple and quick manner, the sand cleaning operation, while holding very high hygiene conditions.

Another object of the present invention is to provide such a cleaning device which, owing to its specifically designed constructional characteristics, is very reliable and safe in operation.

Yet another object of the present invention is to provide such a cleaning device for quickly cleaning beddings of small domestic animals which can be easily made starting from easily commercially available elements and materials and which, moreover, is very competitive from a mere economic standpoint.

According to one aspect of the present invention, the above mentioned aim and objects, as well as yet other objects, which will become more apparent hereinafter, are achieved by a cleaning device for quickly cleaning beddings of small domestic animals, characterized in that said cleaning device comprises a collecting casing, on the top of which is arranged a collecting net for separating from the sand the organic waste of the domestic animals.

The screened sand, in particular, can be reused, while the organic waste is eliminated or disposed of.

### BRIEF DESCRIPTION OF THE DRAWINGS

Further characteristics and advantages of the present invention will become more apparent hereinafter from the following detailed disclosure of a cleaning device for quickly cleaning beddings of small domestic animals, which is illustrated, by way of an indicative, but not limitative, example in the accompanying drawings, where:

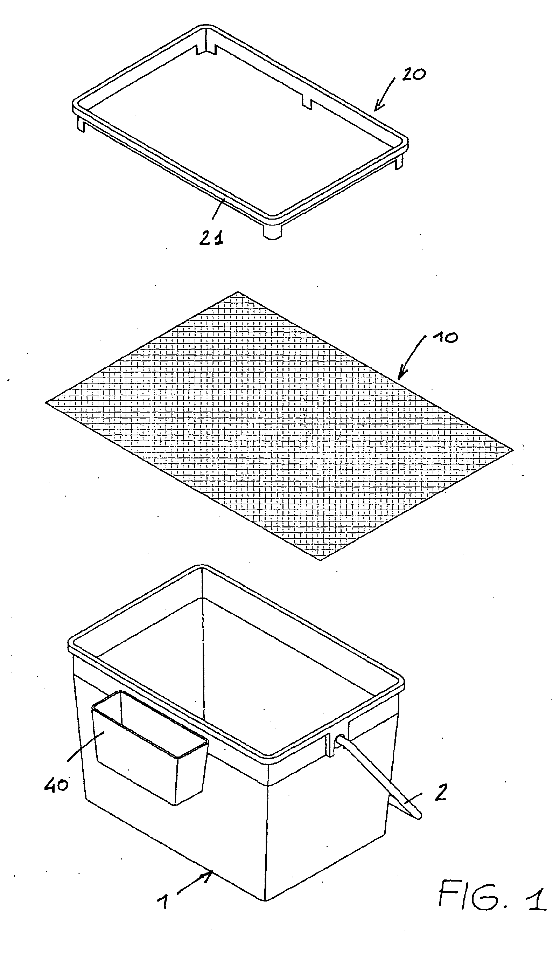

Figure 1 is a schematic perspective view illustrating the cleaning device according to the invention;

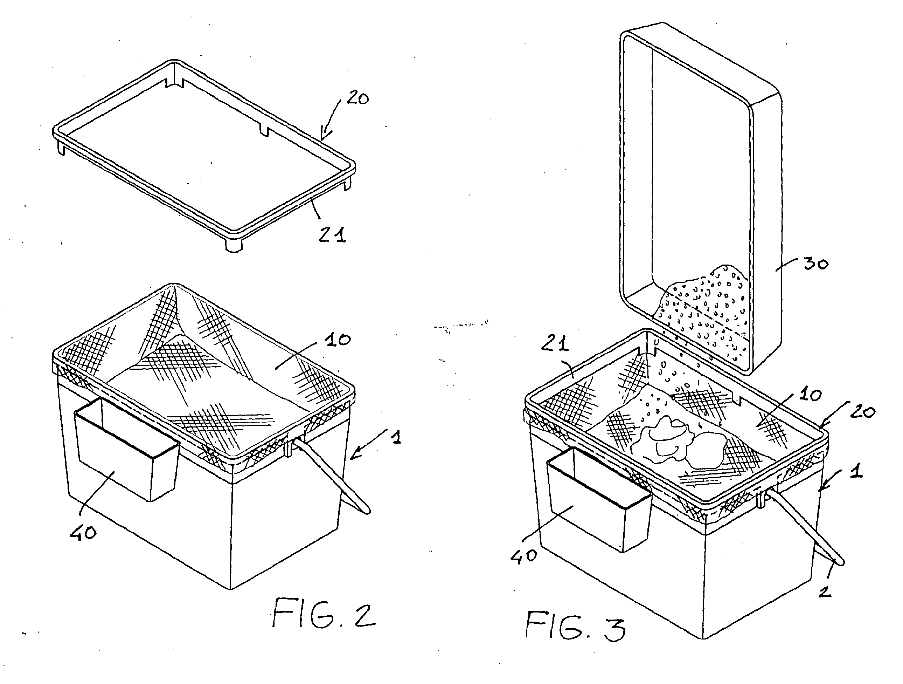

Figure 2 illustrates an operating step for arranging a net on the collecting casing;
Figure 3 illustrates a further operating step for screening the sand material;

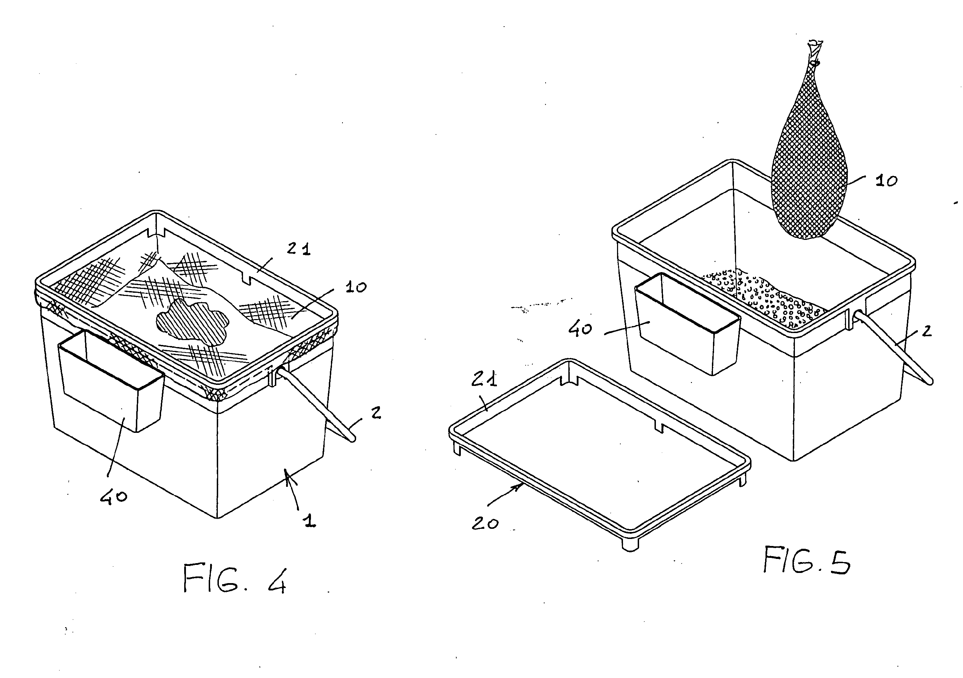

Figure 4 illustrates the net and the organic wastes separated therefrom;

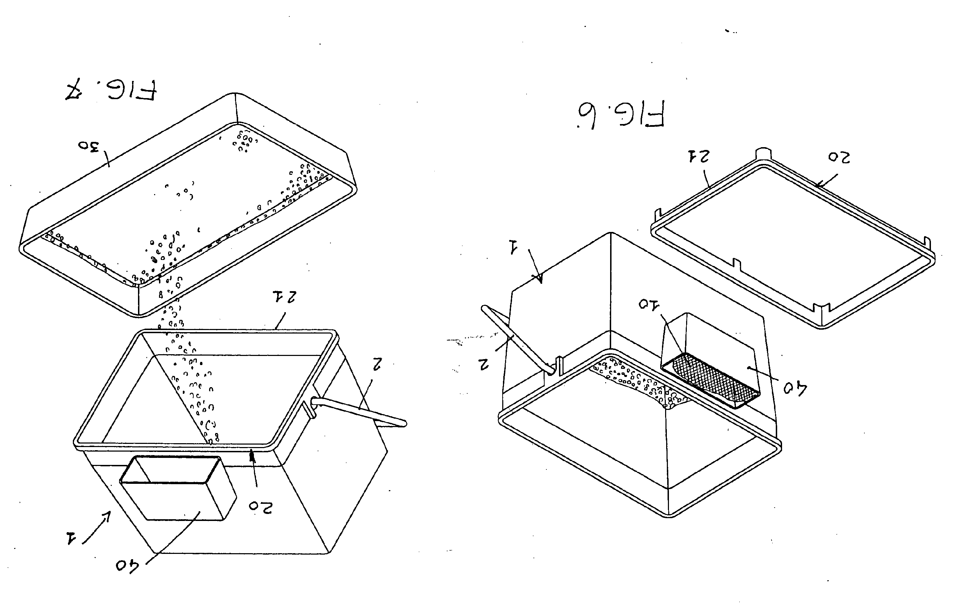

Figure 5 illustrates a further operating step of removing the net with the organic waste material;
Figure 6 shows a further operating step in which the net is introduced into a collecting bag which can be used for disposing of the waste material;
   and
Figure 7 illustrates a further operating step in which the screened and cleaned sand is recovered.

### DESCRIPTION OF THE PREFERRED EMBODIMENTS

With reference to the number references of the above mentioned figures, the cleaning device for quickly cleaning small domestic animal beddings comprises a collecting casing, generally indicated by the reference number 1, which can be optionally provided with a swinging handle 2 or any other suitable gripping element.

The collecting casing can assume any suitable configuration, and can be made with several shapes, colors, materials and dimensions.

At the top edge portion of the collecting casing is arranged a collecting net, generally indicated by the reference number 10, which can be either fixed or, optionally, of a disposable type.

Said net can have any desired shapes, colors and dimensions of its meshes, to be used in association with any desired type of beddings, from a canary to a small dog.

In order to hold the net 10 at a set position, is provided a net holding device, generally indicated by the reference number 20, which advantageously comprises a frame element 21 which can be applied to the top edge portion of the collecting casing 1, in order to restrain the net at a desired position thereof.

The frame element 21 is also provided to form a projecting edge, preventing the sand material from accidentally exiting the casing.

Thus, after having properly arranged the net on the collecting casing 1, the sand material will be poured thereon to form the bedding 30.

More specifically, for cleaning the sand material, it is screened to separate, through the collecting net, the waste material, such as excrements and the like, wet sand agglomerates, whereas the cleaned sand can easily pass through the meshes of the net to be collected on the bottom of the collecting casing 1.

Adjoining the collecting casing 1, it is moreover advantageously possible to provide a bag collecting device, generally indicated by the reference number 40, in which it is possible to easily engage a disposable type of net with the related collected excrements, which can be easily separated, collected and then disposed of.

The adjoining relationship of the bag collecting device allows the net-excrement assembly to be directly disposed of without the need of transporting the net-excrement assembly through long distances.

From the above disclosure it should be apparent that the invention fully achieves the intended aim and objects.

In particular, the fact is to be pointed out that the invention provides a cleaning device allowing to perform, in a very simple, quick and hygienic manner, the cleaning and recovering of a large amount of sand used for small domestic animal beddings.

Thus, the invention relates, in addition to the economic problems, also those problems related to the supplying of sand, which, in prior art beddings, must be used in comparatively high amounts.

In practicing the invention, the used materials, provided that they are compatible to the intended application, as well as the contingent size and shapes, can be any, depending on requirements.

## Claims

1. A cleaning device, for cleaning beddings for small domestic animals, **characterized in that** said cleaning device comprises a casing on a top of which is arranged a collecting net for separating sand from organic waste materials of said domestic animals, thereby allowing the screened and cleaned sand to be reused, while separating and disposing of said organic waste materials.

2. A cleaning device, according to the preceding claim, **characterized in that** said collecting net is of a fixed type.

3. A cleaning device, according to the preceding claims, **characterized in that** said collecting device is of a disposable type.

4. A cleaning device, according to one or more of the preceding claims, **characterized in that** said cleaning device comprises moreover a restraining element for holding said collecting net at a set position on said collecting casing.

5. A cleaning device, according to one or more of the preceding claims, **characterized in that** said restraining element comprises a frame element which can be fitted on a top edge portion of said collecting casing.

6. A cleaning device, according to one or more of the preceding claims, **characterized in that** said frame element is designed for providing a raised edge portion adapted to prevent sand material from accidentally exiting said collecting casing as said sand material is screened.

7. A cleaning device, according to one or more of the preceding claims, **characterized in that** said cleaning device further comprises, adjoining said collecting casing, an element for arranging therein collecting bags, in which said net and organic waste materials collected thereby can be arranged.

8. A cleaning device for quickly cleaning beddings of small domestic animals, according to one or more of the preceding claims, and substantially as broadly disclosed and illustrated and for the intended aim and objects.
